# EUROPÄISCHE PATENTSCHRIFT

(11) **EP 3 529 967 B1**
(45) Veröffentlichungstag und Bekanntmachung des Hinweises auf die Patenterteilung: **11.10.2023**
(21) Anmeldenummer: 17791642.6
(22) Anmeldetag: 18.10.2017
(51) Int. Cl.: H04L 9/40, H04L 67/1097

(54) **VERFAHREN ZUM VERBINDEN VON GERÄTEN MIT DER SOGENANNTEN CLOUD, COMPUTERPROGRAMM MIT EINER IMPLEMENTATION DES VERFAHRENS UND VERARBEITUNGSEINHEIT ZUR AUSFÜHRUNG DES VERFAHRENS**
METHOD FOR CONNECTING DEVICES TO THE SO-CALLED CLOUD, COMPUTER PROGRAM WITH AN IMPLEMENTATION OF THE METHOD AND PROCESSING UNIT FOR EXECUTING THE METHOD
PROCÉDÉ DE LIAISON D'APPAREILS AVEC CE QU'IL EST CONVENU D'APPELER LES NUAGES, PROGRAMME INFORMATIQUE IMPLIQUANT UNE MISE EN OEUVRE DU PROCÉDÉ ET UNITÉ DE TRAITEMENT DESTINÉE À EXÉCUTER LE PROCÉDÉ

(30) Priorität: 29.11.2016 EP 16201204
(43) Veröffentlichungstag der Anmeldung: 28.08.2019
(73) Patentinhaber: Siemens Aktiengesellschaft, 80333 München (DE)
(72) Erfinder: VERMA, Amit, 82024 Taufkirchen (DE)
(74) Vertreter: Siemens Patent Attorneys
(86) Internationale Anmeldenummer: PCT/EP2017/076546
(87) Internationale Veröffentlichungsnummer: WO 2018/099647

(56) Entgegenhaltungen:
- US-A1- 2015 188 949
- US-A1- 2016 219 060
- US-B1- 9 087 189

## Beschreibung

Die Erfindung betrifft zuvorderst ein Verfahren zum Verbinden von Geräten (Clients) mit der sogenannten Cloud zur Verwendung von zum Beispiel über das Internet, ein Intranet oder dergleichen zugänglich gemachten Applikationen, Plattformen und IT-Infrastruktur. Die Erfindung betrifft im Weiteren ein Computerprogramm mit einer Implementation des Verfahrens sowie eine Verarbeitungseinheit, zum Beispiel in Form eines sogenannten Gateways, zur Ausführung des Verfahrens.

Die Verwendung von Cloud-Diensten wird mehr und mehr üblich und zwar auch für sogenannte IIoT-Anwendungen (IIoT = Industrial Internet of Things). Problematisch bei der Verwendung von Cloud-Diensten sind allerdings verschiedenste Sicherheitsrisiken. So kann zum Beispiel eine Verletzung der Vertraulichkeit und Integrität der Daten drohen, zum Beispiel durch unberechtigtes Ausspähen der in die Cloud übermittelten Daten und/oder durch Veränderung in die Cloud übermittelter oder aus der Cloud abgerufener Daten.

Aus der US 9,087,189 ist ein Verfahren zum Verbinden eines Geräts mit der Cloud bekannt, wobei sich das Gerät mit einem speziellen Gateway verbindet und diesem Informationen zu einem Sicherheitsstatus des Geräts übermittelt. Nur wenn der Sicherheitsstatus den in einer Richtlinie festgelegten Anforderungen entspricht, ist die Verbindung in die Cloud möglich. Im Rahmen einer solchen Richtlinie kann zum Beispiel definiert sein, dass das anfragende Gerät eine Sicherheitssoftware, insbesondere eine im Rahmen der Richtlinie vorgegebene Version einer Sicherheitssoftware, aufweisen, bestimmte Verschlüsselungsarten beherrschen und/oder eine Antivirensoftware oder eine Firewall aufweisen muss.

Eine Aufgabe der vorliegenden Erfindung besteht darin, ein Verfahren zum sicheren Verbinden von Geräten (Clients) mit der Cloud anzugeben.

Diese Aufgabe wird erfindungsgemäß mittels eines Verfahrens mit den Merkmalen des Anspruchs 1 gelöst. Danach wird zum sicheren Verbinden eines Geräts (Client) mit der Cloud ein im Folgenden als Conciergedienst bezeichneter spezieller Dienst verwendet. Unter Verwendung dieses Conciergedienstes umfasst das hier vorgeschlagene Verfahren zum sicheren Verbinden eines Geräts mit der Cloud die folgenden Schritte: Der Client verbindet sich mit dem Conciergedienst der Cloud und übermittelt diesem Informationen bezüglich der von dem Client angebotenen Sicherheitsfunktion oder Sicherheitsfunktionen. Der Conciergedienst ermittelt daraufhin ein für den anfragenden Client passendes Sicherheitsprofil anhand der vom Client übermittelten Information über dessen Sicherheitsfunktion oder Sicherheitsfunktionen. Schließlich verbindet der Conciergedienst den anfragenden Client mit einem zu dem ermittelten Sicherheitsprofil passenden Kommunikationskanal aus einer Gruppe von Kommunikationskanälen oder vermittelt eine solche Verbindung.

Der Vorteil des hier vorgestellten Ansatzes besteht darin, dass jeder Client abhängig von den von diesem angebotenen Sicherheitsfunktionen mit einem dazu passenden Kommunikationskanal aus einer Gruppe von Kommunikationskanälen verbunden wird und auf diese Weise Clients mit leistungsfähigen Sicherheitsfunktionen und einem entsprechenden Sicherheitsprofil anders behandelt werden können als Clients mit weniger leistungsfähigen Sicherheitsfunktionen oder ohne Sicherheitsfunktionen und einem damit einhergehenden Sicherheitsprofil. Dies schafft Überwachungs- und Kontrollmöglichkeiten bei der Verwendung von mittels der Cloud zur Verfügung gestellten Diensten, die bisher nicht gegeben waren, und folglich resultiert eine erhöhte Sicherheit für den Verwender des jeweiligen Clients, aber vor allem auch eine erhöhte Sicherheit für Verwender anderer Clients, welche dieselben Dienste in der Cloud nutzen.

Die Zuordnung jeweils eines Kommunikationskanals aus einer Gruppe von Kommunikationskanälen zu jeweils einem Client abhängig von dessen Sicherheitsprofil ermöglicht dabei zum Beispiel die sicherheitsprofilabhängige Verwendung einer verschlüsselten Kommunikation über die einzelnen Kommunikationskanäle, derart, dass ein Client mit leistungsfähigen Sicherheitsfunktionen und einem entsprechenden Sicherheitsprofil einen Kommunikationskanal nutzt, der die Verwendung der jeweiligen Sicherheitsfunktionen voll unterstützt, während ein Client mit weniger leistungsfähigen Sicherheitsfunktionen oder ohne Sicherheitsfunktionen zum Beispiel einen Kommunikationskanal nutzt, über den Daten auch unverschlüsselt übertragen werden können.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Verfahrens zum sicheren Verbinden von Geräten mit der sogenannten Cloud nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen.

Beispielsweise kann in Abhängigkeit von einem Sicherheitsprofil eines Geräts/Clients ein zu dem Sicherheitsprofil passender Kommunikationskanal aus einer Gruppe von mehreren Kommunikationskanälen ausgewählt werden und die Kommunikation mit der Cloud dann über den ausgewählten Kommunikationskanal erfolgen. Somit ist eine Auswahl eines Kommunikationskanals aus einer Gruppe von Kommunikationskanälen in Abhängigkeit von einem Sicherheitsprofil des anfragenden Clients möglich.

Bei der Gruppe von Kommunikationskanälen handelt es sich bspw. um (zumindest abschnittsweise) parallele Kommunikationskanäle, die entlang zumindest eines Abschnitts zwischen einerseits der Cloud bzw. einer oder mehrerer Anwendungen in der Cloud, insbesondere einem oder mehrerer sog. Dienste in der Cloud und andererseits dem anfragenden Gerät bzw. dem anfragenden Client eingerichtet werden können bzw. einrichtbar sind. Das Gerät bzw. der Client ist dann über einen ausgewählten Kommunikationskanal mit der Cloud bzw. einer oder mehrerer Anwendungen in der Cloud, insbesondere einem oder mehrerer sog. Dienste in der Cloud, verbindbar bzw. verbunden. Bspw. kann einem Kommunikationskanal ein oder mehrere Mikrodienste zugeordnet werden, bzw. kann ein Kommunikationskanal einen oder mehrere Mikrodienste umfassen oder aus einem oder mehreren Mikrodiensten bestehen. Dabei können sich die Kommunikationskanäle einer Gruppe von Kommunikationskanälen hinsichtlich der Funktion einer oder mehrere Mikrodienste und/oder der Anzahl der Mikrodienste und/oder der Reihenfolge der Mikrodienste voneinander unterscheiden. Ein oder mehrere bzw. sämtliche Kommunikationskanäle können bspw. aus einem oder mehreren der Mikrodienste gebildet werden. Zu diesem Zweck können ein oder mehrere Mikrodienste in Abhängigkeit des Sicherheitsprofils bzw. der Sicherheitsfunktion des Gerätes bzw. des Clients ausgewählt werden. Dabei können für unterschiedliche Sicherheitsfunktionen und/oder unterschiedliche Sicherheitsprofile auch unterschiedlich Mikrodienste ausgewählt werden.

Bei einer Ausführungsform des Verfahrens ist die Verbindung eines Geräts (Clients) mit einem zu dem ermittelten Sicherheitsprofil des Clients passenden Kommunikationskanal mit einer Freischaltung vorgegebener oder vorgebbarer erster Mikrodienste aus einer Gruppe erster Mikrodienste für das Gerät verbunden. Dass die Verbindung des Clients mit dem Kommunikationskanal mit einer Freischaltung bestimmter Mikrodienste, nämlich zur Unterscheidung als erste Mikrodienste bezeichnete Dienste, die zum Beispiel ein Speichern von Daten in der Cloud ermöglichen, verbunden ist, bedeutet, dass die Verbindung mit dem Kommunikationskanal und die Freischaltung bestimmter erster Mikrodienste gleichzeitig oder zumindest im Zusammenhang erfolgt, zum Beispiel indem jedem Kommunikationskanal ein bestimmter erster Mikrodienst oder eine Mehrzahl bestimmter erster Mikrodienste zugeordnet ist. Die Freischaltung lediglich bestimmter erster Mikrodienste schränkt zum Beispiel die Möglichkeit, Daten in der Cloud zu speichern, zu verändern und/oder zu löschen entsprechend dem für den jeweiligen Client jeweils ermittelten Sicherheitsprofil ein und gewährleistet, dass Clients mit einem hohen Sicherheitsprofil andere und erweiterte Möglichkeiten erhalten als Clients mit einem im Vergleich dazu geringen Sicherheitsprofil.

Bei einer zusätzlichen oder alternativen Ausführungsform des Verfahrens ist die Verbindung eines Geräts (Client) mit einem zu dem ermittelten Sicherheitsprofil des Clients passenden Kommunikationskanal mit einer Aktivierung vorgegebener oder vorgebbarer zweiter Mikrodienste aus einer Gruppe zweiter Mikrodienste zur Überwachung der über den Kommunikationskanal übertragenen Daten verbunden. Dass die Verbindung des Clients mit dem Kommunikationskanal mit einer Aktivierung bestimmter Mikrodienste, nämlich zur Unterscheidung als zweite Mikrodienste bezeichnete Dienste, zum Beispiel Dienste zur Authentifizierung und/oder Autorisierung eines Clients, verbunden ist, bedeutet, dass die Verbindung mit dem Kommunikationskanal und die Aktivierung bestimmter zweiter Mikrodienste gleichzeitig oder zumindest im Zusammenhang erfolgt, zum Beispiel indem jedem Kommunikationskanal ein bestimmter zweiter Mikrodienst oder eine Mehrzahl bestimmter zweiter Mikrodienste zugeordnet ist. Während über unterschiedliche Kommunikationskanäle zum Beispiel eine Datenübertragung unter Verwendung unterschiedlich leistungsfähiger kryptographischer Algorithmen möglich ist, erlaubt die Aktivierung bestimmter zweiter Mikrodienste zum Beispiel auch bei einem Kommunikationskanal zur unverschlüsselten Datenübertragung eine Prüfung der übertragenen Daten oder dergleichen.

Bei einer weiteren Ausführungsform des Verfahrens erfolgt die Verbindung eines Geräts (Clients) mit einem zu dem ermittelten Sicherheitsprofil des Clients passenden Kommunikationskanal entsprechend der Daten in einer von dem Conciergedienst umfassten, dem Conciergedienst zugeordneten oder einer für den Conciergedienst zumindest erreichbaren Kanalkonfigurationsdatenbank. Die Kanalkonfigurationsdatenbank ermöglicht eine einfache und gegebenenfalls auch dynamisch veränderbare Parametrierung der hier vorgeschlagenen sicheren Verbindung eines Clients mit der Cloud. Die Kanalkonfigurationsdatenbank umfasst optional auch Daten bezüglich der ersten Mikrodienste, die bei einer Verbindung eines Clients mit einem bestimmten Kommunikationskanal für den jeweiligen Client freigeschaltet werden und/oder Daten bezüglich der zweiten Mikrodienste, die bei einer Verbindung eines Clients mit einem bestimmten Kommunikationskanal für die über den jeweiligen Kommunikationskanal übertragenen Daten aktiviert werden. Auch diese Daten sind optional dynamisch veränderbar und erlauben damit eine noch weitergehende Parametrierbarkeit des hier vorgeschlagenen Verfahrens zur sicheren Verbindung eines Clients mit der Cloud.

Die eingangs genannte Aufgabe wird auch mittels einer als Schnittstelleneinheit in der Cloud oder zur Cloud fungierenden Verarbeitungseinheit, insbesondere einer Verarbeitungseinheit in Form eines Gateways oder Knotenrechners oder dergleichen, gelöst, indem diese Mittel zur Ausführung des hier und im Folgenden beschriebenen Verfahrens umfasst. Die Erfindung ist bevorzugt in Software implementiert. Die Erfindung ist damit einerseits auch ein Computerprogramm mit durch einen Computer in Form der Verarbeitungseinheit ausführbaren Programmcodeanweisungen und andererseits ein Speichermedium mit einem derartigen Computerprogramm, also ein Computerprogrammprodukt mit Programmcodemitteln, sowie schließlich auch eine Verarbeitungseinheit, in deren Speicher als Mittel zur Ausführung des Verfahrens und seiner Ausgestaltungen ein solches Computerprogramm geladen oder ladbar ist.

Für die weitere Beschreibung gilt zur Vermeidung unnötiger Wiederholungen, dass Merkmale und Details, die im Zusammenhang mit dem genannten Verfahren zum sicheren Verbinden eines Clients mit der Cloud sowie eventueller Ausgestaltungen beschrieben sind, selbstverständlich auch im Zusammenhang mit und im Hinblick auf die zur Ausführung des Verfahrens bestimmte und eingerichtete Verarbeitungseinheit und umgekehrt gelten, so dass die Verarbeitungseinheit auch entsprechend einzelner oder mehrerer Verfahrensmerkmale fortgebildet sein kann, indem die Verarbeitungseinheit Mittel zu deren Ausführung umfasst.

Das im Folgenden beschriebene Verfahren zum Verbinden von Geräten mit der Cloud ist zur automatischen Ausführung in Form eines Computerprogramms, ggf. auch in Form eines verteilten Computerprogramms, implementiert. Das Computerprogramm ist zur Ausführung durch zumindest eine als Schnittstelle in der Cloud oder zur Cloud fungierende Verarbeitungseinheit (Gateway, Knotenrechner) bestimmt. Wenn im Folgenden Verfahrensschritte oder Verfahrensschrittfolgen beschrieben werden, bezieht sich dies auf Aktionen, die automatisch und ohne Eingriff eines Benutzers aufgrund des Computerprogramms oder unter Kontrolle des Computerprogramms erfolgen. Zumindest bedeutet jede Verwendung des Begriffs "automatisch", dass die betreffende Aktion aufgrund des Computerprogramms oder unter Kontrolle des Computerprogramms erfolgt.

Für den Fachmann ist selbstverständlich, dass anstelle einer Implementation des hier vorgeschlagenen Verfahrens in Software genauso auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: die Cloud und ein Gerät, welches mit der Cloud zur Nutzung darin angebotener Dienste verbunden ist oder verbunden werden soll,
- FIG 2: unterschiedliche Geräte, die für eine Verbindung mit der Cloud und zur Nutzung darin angebotener Dienste in Betracht kommen,
- FIG 3: eine als Schnittstelle zwischen einem Gerät oder einer Vielzahl von Geräten und der Cloud fungierende Sicherungsfunktion gemäß dem hier vorgeschlagenen Ansatz sowie
- FIG 4: ein Computerprogramm als Beispiel für eine Implementation des hier vorgestellten Verfahrens.

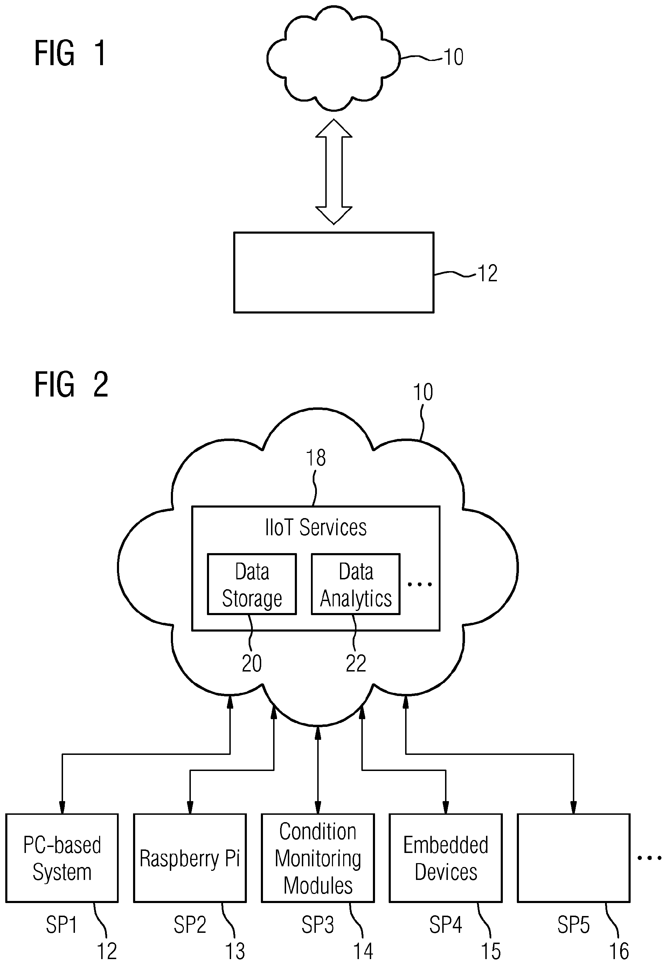

FIG 1 ist eine schematisch vereinfachte Übersichtsdarstellung und zeigt einerseits symbolisch die sogenannte Cloud 10 und andererseits ein Gerät 12, das zur kommunikativen Verbindung mit der Cloud 10 an diese angeschlossen werden soll. Die Cloud 10 umfasst in an sich bekannter Art und Weise eine Vielzahl nicht dargestellter, untereinander kommunikativ (zum Beispiel über das Internet) verbundener Geräte oder Server. Zur Unterscheidung von den von der Cloud 10 umfassten Geräten wird das nicht zur Cloud 10 gehörige Gerät 12, welches mit der Cloud 10 verbunden werden soll, im Folgenden mitunter auch als Client 12 bezeichnet. Die Art und/oder die Anzahl der von der Cloud 10 umfassten Geräte ist für den Client 12 unerheblich und normalerweise auch nicht bekannt.

Bei der hier vorgestellten Neuerung kommt es darauf an, dass bisher kaum Sicherheitsvorkehrungen beim Verbinden eines Clients 12 mit der Cloud 10 vorgesehen sind. Theoretisch kann daher beim Verbinden eines "böswilligen" Clients 12 mit der Cloud 10 großer Schaden angerichtet werden, indem zum Beispiel in der Cloud 10 vorgehaltene Daten gelöscht oder verändert werden oder Schadprogramme in die Cloud 10 eingeschleust werden.

Die Darstellung in FIG 2 zeigt auf Basis der Darstellung in FIG 1 ein Szenario, wie es der hier vorgestellten Neuerung zugrunde liegt. Demnach besteht die Möglichkeit, mit unterschiedlichen Geräten (Clients) Anschluss an die Cloud 10 zu suchen. Als Clients 12, 13, 14, 15, 16 kommen zum Beispiel PC-basierte Systeme, sogenannte intelligente Sensoren (smart sensors) und/oder Sensor Gateways (zum Beispiel basierend auf Raspberry Pi), Automatisierungs- oder Steuerungsgeräte (zum Beispiel speicherprogrammierbare Steuerungen (SPS) oder Geräte eines Prozessleitsystems (DCS, PLS)), Condition Monitoring Geräte und dergleichen in Betracht, jedenfalls Geräte, die im Betrieb zu einer Automatisierungslösung zur Steuerung und/oder Überwachung eines technischen Prozesses gehören. Innerhalb der Cloud 10 stehen den Clients 12-16 zum Beispiel IIoT-Dienste (IIoT-Services; IIoT = Industrial Internet of Things) 18 zur Verfügung, darunter beispielsweise Dienste 20 zum Speichern von Daten in der Cloud 10 (Data Storage) und Dienste 22 zur Datenanalyse mit Mitteln der Cloud 10 (Data Analysis).

Auf die Art des jeweiligen Clients 12-16 und grundsätzlich auch auf die Art der in der Cloud 10 genutzten Dienste 18-22 kommt es im Folgenden nicht wesentlich an. Allerdings ist festzuhalten, dass sich verschiedene Clients 12-16 zum Beispiel hinsichtlich ihrer jeweiligen Rechenleistung unterscheiden und damit auch unterschiedliche Sicherheitsfunktionen oder Sicherheitsprofile des jeweiligen Clients 12-16 einhergehen. Der jeweilige Umfang angebotener Sicherheitsfunktionen oder Sicherheitsprofile ist in den Darstellungen symbolisch mit SPx (SP = Security Profile) eingezeichnet und die Darstellung in FIG 2 zeigt insoweit, dass die an die Cloud 10 angeschlossenen/ßenden Clients 12-16 jeweils unterschiedliche Sicherheitsfunktionen und Sicherheitsprofile (SP1, SP2, SP3, SP4, SP5) mitbringen. Zur genauen Bezeichnung eines Clients 12-16 mit bestimmten Sicherheitsfunktionen und einem daraus resultierenden Sicherheitsprofil kann der jeweilige Client 12-16 zum Beispiel auch als SP1-Client 12, SP2-Client 13, SP3-Client 14, SP4-Client 15 und SP5-Client 16 bezeichnet werden.

Jedes Gerät 12-16, welches mittels der Cloud 10 angebotene Dienste 18-22 nutzt, stellt abhängig von dessen jeweiligen Sicherheitsfunktionen und einem daraus resultierenden Sicherheitsprofil ein potentielles Risiko für die mittels der Cloud 10 angebotene Funktionalität (Cloud-Plattform) dar.

Ein Client 12-16 in Form eines heute üblichen PC-basierten Systems besitzt zum Beispiel mehr als ausreichend Rechenleistung zur Anwendung von grundsätzlich aufwändigen kryptographischen Algorithmen (zum Beispiel SSL/TSL) und weist üblicherweise Software zur Erkennung von Schadprogrammen (Virenscanner, Trojaner etc.) auf. Ein solcher Client 12-16 besitzt leistungsfähige Sicherheitsfunktionen und entsprechend kann dieser einem Sicherheitsprofil einer höchsten oder zumindest einer hohen Stufe (SP1) zugeordnet werden. Sicherheitsprofile einer niedrigeren Stufe (SP2) ergeben sich üblicherweise, wenn es sich bei dem Client 12-16 zum Beispiel um ein älteres Computersystem oder ein PC-basiertes System mit geringerem Leistungsumfang und entsprechend weniger leistungsfähigen Sicherheitsfunktionen oder einer insgesamt reduzierten Anzahl von Sicherheitsfunktionen handelt. Bei solchen Clients 12-16 findet zum Beispiel eine Begrenzung der Länge der bei einer verschlüsselten Datenübertragung verwendeten Schlüssel (Keys) statt und/oder es werden weniger leistungsfähige, aber auch weniger rechenaufwändige kryptographische Algorithmen verwendet. Sicherheitsprofile einer nochmals niedrigeren Stufe (SP3) können zum Beispiel bei einem Client 12-16 in Form eines sogenannten Embedded Systems (zum Beispiel zum Condition Monitoring) gegeben sein. Solche Clients 12-16 ermöglichen aufgrund der begrenzten Rechenleistung zum Beispiel nur eine symmetrische Verschlüsselung der mit den in der Cloud 10 angebotenen Diensten 18 ausgetauschten Daten anstelle einer grundsätzlich sichereren asymmetrischen Verschlüsselung. Ein nochmals niedrigeres Sicherheitsprofil (SP4) ist gegeben, wenn ein Client 12-16 eine verschlüsselte Datenübertragung nur für bestimmte Daten ermöglicht und andere Daten unverschlüsselt übertragen werden. Clients 12-16 mit einem Sicherheitsprofil einer niedrigsten Stufe (SP5) empfangen und übertragen Daten von und zur Cloud 10 und den dort verwendeten Diensten 18 zum Beispiel generell unverschlüsselt.

Die nachfolgende Beschreibung wird - ohne Verzicht auf eine weitergehende Allgemeingültigkeit - anhand einer Cloud-Plattform fortgesetzt, mittels derer IIoT-Dienste 18-22 angeboten werden. Nachdem solche Dienste 18-22 grundsätzlich mittels unterschiedlichster Geräte (Clients) 12-16 und von unterschiedlichen Herstellern genutzt werden können, besteht ein nicht unerhebliches Risiko, dass ein Angreifer versucht, mittels eines "bösartigen" Clients 12-16 oder durch "Hacken" eines Clients 12-16 Zugriff auf die in der Cloud 10 angebotenen Dienste 18-22 zu erhalten. Eine Absicherung der in der Cloud 10 angebotenen Dienste 18-22 erschwert den Zugang zu den dort angebotenen Diensten 18-22 und erhöht die Sicherheit der Nutzung solcher Dienste 18-22 und erhöht damit letztlich auch die Sicherheit angeschlossener berechtigter und "gutartiger" Clients 12-16.

Die hier vorgeschlagene Neuerung basiert auf der Erkenntnis, dass bei der derzeitigen Situation keine clientspezifische Behandlung einzelner Clients 12-16, welche Dienste 18-22 in der Cloud 10 nutzen oder nutzen wollen, vorgesehen ist. Zur Lösung dieser Problematik ist eine von vom jeweiligen Sicherheitsprofil (SP1, SP2 usw.) abhängige Handhabung zumindest der von dem jeweiligen Client 12-16 in die Cloud 10 und an den jeweiligen Dienst 18-22 gesandten Anfragen und/oder Daten vorgesehen. Optional erstreckt sich die sicherheitsprofilabhängige Handhabung auf vom jeweiligen Client 12-16 in die Cloud 10 gesandte Anfragen/Daten und aus der Cloud 10 an den jeweiligen Client 12-16 gesandte Antworten/Daten.

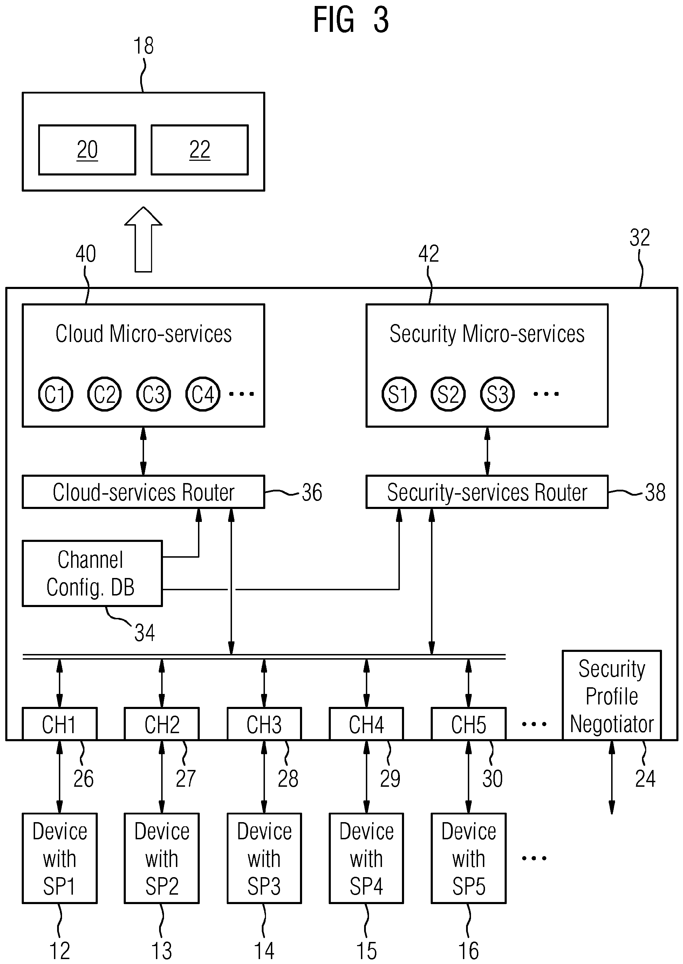

Zu diesem Zweck ist ein spezieller Dienst auf Seiten der Cloud 10 vorgesehen, welcher gewissermaßen den Zugang zur Cloud 10, insbesondere den Zugang zu einzelnen in der Cloud 10 vorgehaltenen Diensten 18-22, überwacht. Der Dienst fungiert demnach wie ein Concierge, der zum Beispiel in Bezug auf ein Gebäude oder ein Anwesen den Zugang zu diesem überwacht. Dieser Dienst wird im Folgenden zur sprachlichen Unterscheidung von anderen in der Cloud 10 verfügbaren Diensten 18-22 entsprechend dem vorstehend skizzierten Bild als Conciergedienst 24 (FIG 3) bezeichnet.

Die Darstellung in FIG 3 zeigt den Conciergedienst 24 und eine Momentaufnahme einer Situation, bei welcher der Conciergedienst 24 einzelne Clients 12-16 entsprechend ihrer jeweiligen Sicherheitsprofile mit einem zum jeweiligen Sicherheitsprofil passenden Kommunikationskanal 26, 27, 28, 29, 30 in die Cloud 10 verbunden hat (symbolisch sind die exemplarisch schematisch gezeigten Kommunikationskanäle 26-30 in FIG 3 zusätzlich mit CH1, CH2, CH3, CH4 und CH5 bezeichnet). Für die Verbindung eines Clients 12-16 mit einem Kommunikationskanal 26-30 steht eine Mehrzahl von Kommunikationskanälen 26-30 zur Verfügung und der Conciergedienst 24 wählt aus der Gruppe der Kommunikationskanäle 26-30 den zu dem jeweiligen Client 12-16 passenden Kommunikationskanal 26-30 aus. Der Conciergedienst 24 kann demnach und entsprechend der nachfolgend mit weiteren Details erläuterten Funktion auch als Sicherheitsprofilverwalter (Security Profile Negotiator) bezeichnet werden.

Der Conciergedienst 24 ist Teil einer in der Cloud 10 implementierten Schnittstelle 32 für Clients 12-16, die Zugriff auf Dienste 18-22 der Cloud 10 zu erhalten wünschen. Der Conciergedienst 24 fungiert innerhalb der Schnittstelle 32 als zumindest anfänglicher Anlaufpunkt für solche Clients 12-16. Ein derartiger Client 12-16 meldet sich beim Conciergedienst 24 an (es wird also eine kommunikative Verbindung zwischen dem jeweiligen Client 12-16 und dem Conciergedienst 24 hergestellt) und der Client 12-16 übermittelt dem Conciergedienst 24 Informationen bezüglich der von dem Gerät 12-16 angebotenen Sicherheitsfunktionen. Bei den dafür übermittelten Informationen kann es sich um eine Kennung oder dergleichen handeln, welche das jeweilige Sicherheitsprofil des Clients 12-16 kodiert, also zum Beispiel eine numerische oder alphanumerische Kennung, insbesondere eine alphanumerische Kennung in Form einer Zeichenfolge, zum Beispiel "SP1", "SP2" usw. Bei der übermittelten Information kann es sich zusätzlich oder alternativ auch um Informationen handeln, welche zum Beispiel einen kryptographischen Algorithmus oder eine Mehrzahl von kryptographischen Algorithmen, welchen bzw. welche der Client 12-16 verwenden kann, und/oder eine vom Client 12-16 verwendbare Schlüssellänge und dergleichen kodiert oder kodieren.

Auf den Empfang einer solchen Information von einem Zugriff auf einen Dienst 18-22 der Cloud 10 suchenden Client 12-16 ermittelt der Conciergedienst 24 das Sicherheitsprofil des Clients 12-16. Die Ermittlung des Sicherheitsprofils durch den Conciergedienst 24 kann im einfachsten Fall darin bestehen, dass der Conciergedienst 24 die vom jeweiligen Client 12-16 empfangene und das Sicherheitsprofil des Clients 12-16 unmittelbar kodierende Information (zum Beispiel in Form einer alphanumerischen Zeichenfolge wie "SP1") interpretiert. Die Ermittlung des Sicherheitsprofils kann auch darin bestehen, dass der Conciergedienst 24 die vom jeweiligen Client 12-16 empfangenen Informationen verarbeitet und zum Beispiel mittels einer Lookup-Tabelle (LUT) oder dergleichen auswertet und auf dieser Basis das Sicherheitsprofil ermittelt.

Abhängig von dem ermittelten Sicherheitsprofil verbindet der Conciergedienst 24 den anfragenden Client 12-16 mit einem zu dem ermittelten Sicherheitsprofil passenden Kommunikationskanal 26-30. Das Ergebnis einer solchen Verbindung eines Clients 12-16 mit einem zu dessen Sicherheitsprofil passenden Kommunikationskanal 26-30 ist beispielhaft in der Darstellung in FIG 3 gezeigt. Ein erster Client 12 mit einem Sicherheitsprofil der höchsten Stufe (SP1; SP1-Client 12) ist mit einem dazu passenden Kommunikationskanal 26 (CH1) verbunden. Weitere Clients 13, 14, 15, 16 mit einem niedrigeren Sicherheitsprofil (SP2, SP3, SP4, SP5) sind ebenfalls mit einem jeweils zu dem Sicherheitsprofil passenden Kommunikationskanal 27, 28, 29, 30 (CH2, CH3, CH4, CH5) verbunden.

Zu jedem Sicherheitsprofil gehört also ein dazu passender Kommunikationskanal 26-30, wobei der Kommunikationskanal 26-30 dadurch zu einem Sicherheitsprofil passt, dass der Kommunikationskanal 26-30 wiederum zu dem Sicherheitsprofil passende Kommunikationsmöglichkeiten zu und mit den in der Cloud 10 vorgehaltenen Diensten 18-22 anbietet. Ein zu dem höchsten Sicherheitsprofil (SP1) passender Kommunikationskanal 26 (CH1) ermöglicht zum Beispiel die Verwendung besonders leistungsfähiger kryptographischer Algorithmen und ein zu dem niedrigsten Sicherheitsprofil (SP5) passender Kommunikationskanal 30 (CH5) ermöglicht zum Beispiel eine unverschlüsselte Datenübermittlung zu und von einem Dienst 18-22 in der Cloud 10.

Die Schnittstelle 32 zwischen einem Client 12-16 und einem oder mehreren Diensten 18-22 in der Cloud 10 umfasst neben dem Conciergedienst 24 eine Datenbank 34 (Kanalkonfigurationsdatenbank), einen ersten Router 36 für Cloud-Dienste und zu Cloud-Diensten (Cloud Services Router), einen zweiten Router 38 für Sicherheitsdienste und zu Sicherheitsdiensten (Security Services Router) sowie erste und zweite zur Unterscheidung von den vorgenannten Diensten 18-22 als Mikrodienste 40, 42 bezeichnete Dienste.

Die ersten Mikrodienste 40 (Cloud Micro Services; C1, C2, C3, C4) umfassen zum Beispiel Dienste zum Speichern von Daten in der Cloud 10, Dienste für ein Mandantenmanagement (Tenant Management Services), Dienste zur Datenanalyse etc., zum Beispiel Fleet Management Applications, Benchmarking Applications, Asset Management Applications, Warranty Management Applications oder Teilfunktionalitäten solcher Dienste und Applikationen. Der erste Router 36 (Cloud Services Router) verbindet einen Kommunikationskanal 26-30 oder einzelne Kommunikationskanäle 26-30 mit einem ersten Mikrodienst 40 oder einzelnen ersten Mikrodiensten 40. Die Verbindung eines Kommunikationskanals 26-30 mit einem ersten Mikrodienst 40 oder einzelnen ersten Mikrodiensten 40 erfolgt insbesondere entsprechend der in der Kanalkonfigurationsdatenbank 34 hinterlegten und optional dynamisch insbesondere durch einen Benutzer anpassbaren Daten.

Die zweiten Mikrodienste 42 (Security Micro Services; S1, S2, S3, S4) umfassen Dienste zur Authentifizierung und/oder Autorisierung, Dienste zum Auffinden von Schadsoftware, Dienste für heuristische Sicherheitsprüfungen (Heuristic Security Scans), Dienste zur Analyse von im Rahmen von Kommunikationsbeziehungen übertragenen Daten (Deep-Packet Inspection), Dienste für das sogenannte Sandboxing und so weiter. Der zweite Router 38 (Security Services Router) veranlasst für die über einen Kommunikationskanal 26-30 oder einzelne Kommunikationskanäle 26-30 übermittelten Daten vom Client 12-16 in die Cloud 10 oder optional vom Client 12-16 in die Cloud 10 sowie von der Cloud 10 zum Client 12-16 die Ausführung eines zweiten Mikrodiensts 42 oder einzelner zweiter Mikrodienste 42. Auch insoweit besteht - ähnlich wie die Zuordnung eines Kommunikationskanals 26-30 zu einem ersten Mikrodienst 40 oder einzelnen ersten Mikrodiensten 40 - eine Zuordnung eines Kommunikationskanals 26-30 zu einem zweiten Mikrodienst 42 oder einzelnen zweiten Mikrodiensten 42. Die Zuordnung eines Kommunikationskanals 26-30 zu einem zweiten Mikrodienst 42 oder einzelnen zweiten Mikrodiensten 42 erfolgt insbesondere entsprechend der in der Kanalkonfigurationsdatenbank 34 hinterlegten und optional dynamisch insbesondere durch einen Benutzer anpassbaren Daten.

Mittels der Kanalkonfigurationsdatenbank 34 kann zum Beispiel festgelegt werden, dass bei einer Benutzung zum Beispiel des in den Figuren mit der Bezugsziffer 28 bezeichneten Kommunikationskanals (CH3) zumindest auf die darüber in die Cloud 10 übermittelten Daten bestimmte zweite Mikrodienste 42 (zum Beispiel die symbolisch mit S1, S2 und S5 bezeichneten zweiten Mikrodienste 42) angewandt werden und dass bei der Verwendung dieses Kommunikationskanals 28 bestimmte erste Mikrodienste 40 (zum Beispiel die symbolisch mit C1, C3, C4 bezeichneten ersten Mikrodienste 40) benutzt werden dürfen. Insoweit sind in der Kanalkonfigurationsdatenbank 34 Daten hinterlegt, die diese Zuordnung kodieren. Symbolisch kann dies für das soeben beschriebene Beispiel wie folgt geschrieben werden: CH3: S = {S1, S2, S5}; C = {C1, C3, C4}. Allgemein kann demnach der Inhalt der Kanalkonfigurationsdatenbank 34 für jeden mittels der Schnittstelle 32 geschützten und überwachten Kommunikationskanal 26-30 wie folgt geschrieben werden: CHx: S = {Sa .. Sb } | Sa, Sb ∈ {S1 .. Sn}; C = {Ca .. Cb } | Ca, Cb ∈ {C1 .. Cn}.

Bei einem konkreten Beispiel ist das Gerät 12-16, das als Client 12-16 Anschluss an die Cloud 10 zur Nutzung eines oder mehrerer dort angebotener Dienste 18-22 sucht, ein Embedded Gerät, zum Beispiel ein Embedded Gerät zum Aufnehmen, Verarbeiten und Weiterleiten von Sensordaten. Wenn dieses keine Möglichkeiten für eine gesicherte, insbesondere verschlüsselte Datenübertragung bietet und demgemäß nur ungesichert und/oder nicht verschlüsselt Daten in die Cloud 10 übertragen kann, erkennt der Conciergedienst 24 das geringe Sicherheitsprofil, zum Beispiel ein Sicherheitsprofil der niedrigsten Sicherheitsstufe (SP5). Nicht verschlüsselte oder in sonst geeigneter Art und Weise (zum Beispiel mittels einer zertifikatsbasierten Authentifizierung des Clients 12-16) abgesicherte Kommunikation ist zum Beispiel anfällig für einen sogenannten Man-in-the-Middle-Angriff. Daher wird alle Kommunikation in die Cloud 10 und zu einem dort angebotenen Dienst 18-22 bei einem solchen SP5-Client 16 über einen dafür vorgesehenen Kommunikationskanal 26-30, hier den in FIG 3 mit der Bezugsziffer 30 bezeichneten Kommunikationskanal (CH5) abgewickelt und bei der Benutzung dieses Kommunikationskanals 30 (CH5) durch den SP5-Client 16 werden automatisch, nämlich gemäß der Daten in der Kanalkonfigurationsdatenbank 34, bestimmte mit dem Kommunikationskanal 30 (CH5) verbundene zweite Mikrodienste 42 (Security Micro Services) für die über den Kommunikationskanal 30 (CH5) übertragenen Daten aktiviert. Damit werden die von dem SP5-Client 16 in die Cloud 10 übermittelten Daten zum Beispiel einer besonders gründlichen Inspektion (Deep-Packet Inspection) und/oder heuristischen Sicherheitsprüfungen (Heuristic Security Scans) unterzogen. Auf der anderen Seite hat der SP5-Client 16 - ebenfalls aufgrund der Daten in der Kanalkonfigurationsdatenbank 34 - nur einen eingeschränkten Zugriff auf bestimmte, zur der geringen Sicherheitsstufe passende erste Mikrodienste 40 (Cloud Micro Services). So kann ein SP5-Client 16 zum Beispiel nur Zeitreihendaten (Time Series Data) oder dergleichen an einen als Datenspeicher in der Cloud 10 fungierenden Dienst 20 (Data Storage) senden und zum Beispiel keine Dateien übertragen und/oder keine Dateien aus der Cloud 10 herunterladen. Ebenso können zum Beispiel keine Mikrodienste 40 zum Konfigurieren des SP5-Clients 16 (Device Management Microservices) genutzt werden. Wenn also ein Client 12-16 mit einem aufgrund keiner oder wenig leistungsfähiger Sicherheitsfunktionen resultierenden geringen Sicherheitsprofil von einem Angreifer übernommen wird oder ein Angreifer sich in die Kommunikation des Clients 12-16 mit der Cloud 10 einschaltet, sind die Handlungsmöglichkeiten des Angreifers beschränkt und es wird wirksam verhindert, dass der Angreifer zum Beispiel fremde Daten ausspähen, verändern oder löschen kann.

Zur Sicherung der Dienste 18-22 und/oder der Daten in der Cloud 10 und zur Einbettung des hier vorgestellten Ansatzes in den Zugang zur Cloud 10 ist selbstverständlich vorgesehen, dass ein Zugriff auf die zu sichernden Dienste 18-22 und deren Daten nur über die mittels des Conciergedienstes 24 und bei einer speziellen Ausführungsform mittels der den Conciergedienst 24 umfassenden Schnittstelle 32 verwalteten Kommunikationskanäle 26-30 und/oder freigeschalteter erster Mikrodienste 40 möglich ist.

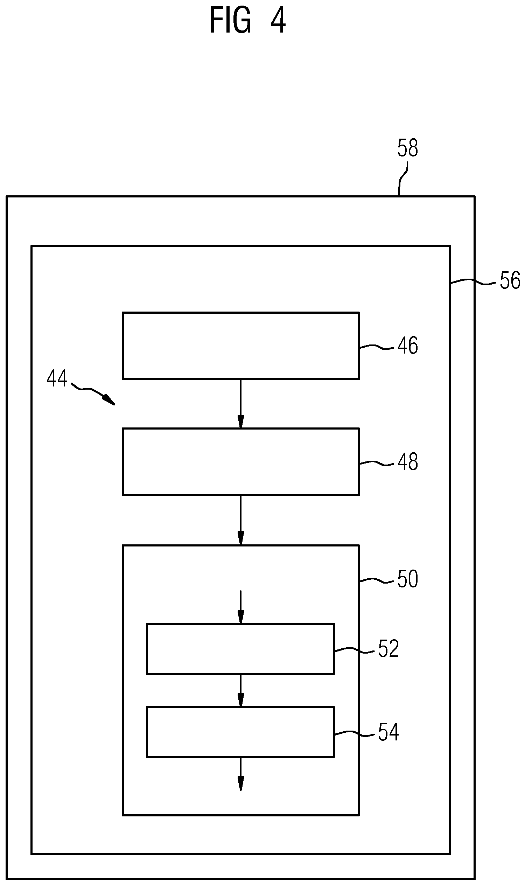

Die Darstellung in FIG 4 zeigt abschließend in schematisch vereinfachter Form ein Computerprogramm 44 in Form eines Flussdiagramms als Beispiel einer Implementation des Verfahrens in Software. Danach umfasst das Verfahren einen ersten Schritt 46, während dessen sich ein Gerät 12-16 mit der Conciergedienst 24 der Cloud 10 verbindet und diesem Informationen bezüglich der von dem Gerät 12-16 angebotenen Sicherheitsfunktionen übermittelt. Während des ersten Schritts 46 empfängt der Conciergedienst 24 diese Informationen von dem Gerät 12-16, das Anschluss an die Cloud 10 sucht. In einem anschließenden zweiten Schritt 48 ermittelt der Conciergedienst 24 ein für das anfragende Gerät 12-16 passendes Sicherheitsprofil anhand der von dem Gerät 12-16 während des ersten Schritts 46 übermittelten Informationen über dessen Sicherheitsfunktionen. In einem abschließenden dritten Schritt 50 verbindet der Conciergedienst 24 das anfragende Gerät 12-16 mit einem zu dem ermittelten Sicherheitsprofil passenden Kommunikationskanal 26-30. Zum dritten Schritt 50 gehören optional ein vierter Schritt 52 oder ein vierter Schritt 52 und ein fünfter Schritt 54. Im vierten Schritt 52 erfolgt eine Freischaltung vorgegebener oder vorgebbarer erster Mikrodienste 40 aus einer Gruppe erster Mikrodienste 40 für das Gerät 12-16. Im fünften Schritt 54 erfolgt eine Aktivierung vorgegebener oder vorgebbarer zweiter Mikrodienste 42 aus einer Gruppe zweiter Mikrodienste 42 zur Überwachung der über den ausgewählten Kommunikationskanal 26-30 übertragenen Daten. Vorgegeben oder vorgebbar sind die ersten und/oder zweiten Mikrodienste 40, 42 zum Beispiel in Form entsprechender Daten in der Kanalkonfigurationsdatenbank 34.

Wie dies in FIG 4 schematisch vereinfacht gezeigt ist, ist das Computerprogramm 44 mit einer Implementation des hier vorgestellten Verfahrens und gegebenenfalls einzelner oder mehrerer Ausführungsformen in einen Speicher 56 einer Verarbeitungseinheit 58, zum Beispiel einer als Gateway in der Cloud 10 oder zur Cloud 10 fungierenden Verarbeitungseinheit 58, geladen und wird beim Betrieb der Verarbeitungseinheit 58 zum Verbinden von Geräten 12-16 mit der Cloud 10 ausgeführt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Die hier vorgeschlagene Neuerung ermöglicht ein sicheres Verbinden von Geräten 12-16 mit der Cloud 10, indem sich das jeweilige Gerät 12-16 zunächst mit einem Conciergedienst 24 der Cloud 10 verbindet und diesem Informationen bezüglich der von dem Gerät 12-16 angebotenen Sicherheitsfunktionen übermittelt, woraufhin der Conciergedienst 24 anhand der von dem anfragenden Gerät 12-16 übermittelten Information über dessen Sicherheitsfunktionen ein für das Gerät 12-16 passendes Sicherheitsprofil ermittelt und das anfragende Gerät 12-16 mit einem zu dem ermittelten Sicherheitsprofil passenden Kommunikationskanal 26-30 aus einer Gruppe mehrerer Kommunikationskanäle 26-30 verbindet, so dass jeder mittels des Conciergedienstes 24 mit der Cloud 10 verbundene Client 12-16 einen Kommunikationskanal 26-30 entsprechend seinem jeweiligen Sicherheitsprofil nutzt, wobei bei Ausgestaltungen des Verfahrens mit jedem Kommunikationskanal 26-30 und/oder einem Sicherheitsprofil weitere sicherheitsprofilspezifische Kontrollmöglichkeiten ergänzt werden können, zum Beispiel eine besonders gründliche Prüfung von über einen ungesicherten Kommunikationskanal 26-30 übertragenen Daten und/oder Funktionsbeschränkungen für einen Client 12-18 abhängig von dessen Sicherheitsprofil und/oder dem verwendeten Kommunikationskanal 26-30.

## Patentansprüche

1. Verfahren zum sicheren Verbinden von Geräten (12-16) mit einer Cloud (10) mit folgenden Schritten:
ein Gerät (12-16) verbindet sich mit einem Conciergedienst (24) der Cloud (10) und übermittelt dem Conciergedienst (24) Informationen bezüglich der von dem Gerät (12-16) angebotenen Sicherheitsfunktionen,
**dadurch gekennzeichnet,**
**dass** der Conciergedienst (24) anhand der von dem Gerät (12-16) übermittelten Information über dessen Sicherheitsfunktionen ein für das anfragende Gerät (12-16) passendes Sicherheitsprofil ermittelt und
**dass** der Conciergedienst (24) das anfragende Gerät (12-16) mit einem zu dem ermittelten Sicherheitsprofil passenden Kommunikationskanal (26-30) aus einer Gruppe von Kommunikationskanälen (26-30) für die Kommunikation mit der Cloud (10) verbindet.

2. Verfahren nach dem vorherigen Anspruch, wobei es sich bei der Gruppe von Kommunikationskanälen um zumindest abschnittsweise parallele Kommunikationskanäle handelt, die entlang zumindest eines Abschnitts zwischen einerseits der Cloud bzw. einer oder mehrerer Anwendungen in der Cloud, insbesondere einem oder mehrerer sog. Dienste in der Cloud und andererseits dem anfragenden Gerät bzw. dem anfragenden Client eingerichtet werden können bzw. einrichtbar sind.

3. Verfahren nach einem der vorherigen Ansprüche, wobei die Kommunikationskanäle einer Gruppe von Kommunikationskanälen hinsichtlich der Funktion einer oder mehrere Mikrodienste und/oder der Anzahl der Mikrodienste und/oder der Reihenfolge der Mikrodienste voneinander unterscheiden.

4. Verfahren nach einem der vorherigen Ansprüche, wobei ein oder mehrere bzw. sämtliche Kommunikationskanäle aus einem oder mehreren der Mikrodienste gebildet werden, wobei die ein oder mehreren Mikrodienste in Abhängigkeit des Sicherheitsprofils bzw. der Sicherheitsfunktion des Gerätes bzw. des Clients ausgewählt werden, und wobei für unterschiedliche Sicherheitsfunktionen und/oder unterschiedliche Sicherheitsprofile auch unterschiedlich Mikrodienste ausgewählt werden.

5. Verfahren nach einem der vorherigen Ansprüche, wobei die Verbindung des Clients mit dem Kommunikationskanal mit einer Freischaltung bestimmter Mikrodienste, verbunden ist, wobei die Freischaltung lediglich bestimmter erster Mikrodienste die Möglichkeit, Daten in der Cloud zu speichern, zu verändern und/oder zu löschen, entsprechend dem für den jeweiligen Client jeweils ermittelten Sicherheitsprofil einschränkt und gewährleistet, dass Clients mit einem hohen Sicherheitsprofil andere und erweiterte Möglichkeiten erhalten als Clients mit einem im Vergleich dazu geringen Sicherheitsprofil.

6. Verfahren nach Anspruch 1,
wobei die Verbindung eines Geräts (12-16) mit einem zu dem ermittelten Sicherheitsprofil des Geräts (12-16) passenden Kommunikationskanal (26-30) mit einer Freischaltung vorgegebener oder vorgebbarer erster Mikrodienste (40) aus einer Gruppe erster Mikrodienste (40) für das Gerät (12-16) verbunden ist.

7. Verfahren nach Anspruch 1 oder 6,
wobei die Verbindung eines Geräts (12-16) mit einem zu dem ermittelten Sicherheitsprofil des Geräts (12-16) passenden Kommunikationskanal (26-30) mit einer Aktivierung vorgegebener oder vorgebbarer zweiter Mikrodienste (42) aus einer Gruppe zweiter Mikrodienste (42) zur Überwachung der über den Kommunikationskanal (26-30) übertragenen Daten verbunden ist.

8. Verfahren nach Anspruch 1, 6 oder 7,
wobei die Verbindung eines Geräts (12-16) mit einem zu dem ermittelten Sicherheitsprofil des Geräts (12-16) passenden Kommunikationskanal (26-30) entsprechend der Daten in einer für den Conciergedienst (24) erreichbaren Kanalkonfigurationsdatenbank (34) erfolgt.

9. Computerprogramm (44) mit Programmcodemitteln, um alle Schritte von jedem beliebigen der Ansprüche 1 bis 8 durchzuführen, wenn das Computerprogramm (44) auf einer als Schnittstelle zur Cloud (10) oder in der Cloud (10) fungierenden Verarbeitungseinheit (58) ausgeführt wird.

10. Computerprogrammprodukt mit Programmcodemitteln, die auf einem computerlesbaren Datenträger gespeichert sind, um das Verfahren nach jedem beliebigen der Ansprüche 1 bis 8 durchzuführen, wenn das Computerprogrammprodukt auf einer als Schnittstelle zur Cloud (10) oder in der Cloud (10) fungierenden Verarbeitungseinheit (58) ausgeführt wird.

11. Digitales Speichermedium mit elektronisch auslesbaren Steuersignalen, die so mit einer als Schnittstelle zur Cloud (10) oder in der Cloud (10) fungierenden Verarbeitungseinheit (58) zusammenwirken können, dass ein Verfahren nach einem der Ansprüche 1 bis 8 ausgeführt wird.

12. Verarbeitungseinheit (58) mit einem Speicher (56), in den ein Computerprogramm (44) nach Anspruch 9 geladen ist, dass beim Betrieb der Verarbeitungseinheit (58) zum Ausführen eines Verfahrens zum sicheren Verbinden eines Geräts (12-16) mit der Cloud (10) nach einem der Ansprüche 1 bis 8 ausgeführt wird

## Claims

1. Method for secure connection of devices (12-16) to a cloud (10), with the following steps:
a device (12-16) connects itself to a concierge service (24) of the cloud (10) and transfers to the concierge service (24) information relating to the security functions provided by the device (12-16),
**characterised in that**
the concierge service (24), on the basis of information transferred by the device (12-16) about its security functions, establishes an appropriate security profile for the requesting device (12-16) and that
the concierge service (24) connects the requesting device (12-16) to a communication channel (26-30) appropriate to the security profile established from a group of communication channels (26-30) for the communication with the cloud (10).

2. Method according to the preceding claim, wherein the group of communication channels involves parallel communication channels, at least in sections, which can be configured or are able to be configured along at least one section between the cloud or one or more applications in the cloud, in particular one or more so-called services in the cloud on the one hand and the requesting device or the requesting client on the other hand.

3. Method according to one of the preceding claims, wherein the communication channels of a group of communication channels are distinguished from one another in respect of the function of one or more micro services and/or the number of the micro services and/or the order of the micro services.

4. Method according to one of the preceding claims, wherein one or more or all communication channels are formed from one or more of the micro services, wherein the one or more micro services can be selected as a function of the security profile or the security function of the device or of the client, and wherein different micro services are also selected for different security functions and/or different security profiles.

5. Method according to one of the preceding claims, wherein the connection of the client to the communication channel is linked to an enabling of specific micro services, wherein the enabling of only specific first micro services restricts the option of storing data in the cloud, changing data and/or deleting data in accordance with the respective security profile established for the respective client and guarantees that clients with a high security profile are given other and expanded options than clients with a comparatively lower security profile.

6. Method according to claim 1,
wherein the connection of a device (12-16) to a communication channel (26-30) appropriate to the established security profile of the device (12-16) is linked to an enabling of predetermined or predeterminable first micro services (40) from a group of first micro services (40) for the device (12-16) .

7. Method according to claim 1 or 6,
wherein the connection of a device (12-16) to a communication channel (26-30) appropriate to the established security profile of the device (12-16) is linked to an activation of predetermined or predeterminable second micro services (42) from a group of second micro services (42) for monitoring the data transmitted via the communication channel (26-30).

8. Method according to claim 1, 6 or 7,
wherein the linkage of a device (12-16) to a communication channel (26-30) appropriate to the established security profile of the device (12-16) is done in accordance with the data in a channel configuration database (34) accessible for the concierge service (24).

9. Computer program (44) with program code means for carrying out all steps of any one of claims 1 to 8 when the computer program (44) is executed on a processing unit (58) functioning as an interface to the cloud (10) or in the cloud (10).

10. Computer program product with program code means that are stored on a computer-readable data medium, in order to carry out the method according to any one of claims 1 to 8, when the computer program product is executed on a processing unit (58) functioning as an interface to the cloud (10) or in the cloud (10) .

11. Digital storage medium with control signals that can be read out electronically, which can interact with a processing unit (58) functioning as an interface to the cloud (10) or in the cloud (10) in such a way that a method according to one of claims 1 to 8 is carried out.

12. Processing unit (58) with a memory (56), into which a computer program (44) according to claim 9 is loaded, which is executed when the processing unit (58) is operating for carrying out a method for secure connection of a device (12-16) to the cloud (10) according to one of claims 1 to 8.

## Revendications

1. Procédé destiné à la connexion sécurisée d'appareils (12-16) à un nuage (10) avec les étapes suivantes :
un appareil (12-16) se connecte à un service de conciergerie (24) du nuage (10) et transmet au service de conciergerie (24) des informations concernant les fonctionnalités de sécurité offertes par l'appareil (12-16),
**caractérisé en ce que**
le service de conciergerie (24) détermine à l'aide des informations transmises par l'appareil (12-16) concernant les fonctionnalités de sécurité de celui-ci un profil de sécurité adapté à l'appareil demandeur (12-16) et
**en ce que** le service de conciergerie (24) connecte l'appareil demandeur (12-16) à un canal de communication (26-30) adapté au profil de sécurité déterminé et qui est issu d'un groupe de canaux de communication (26-30) pour la communication avec le nuage (10).

2. Procédé selon la revendication précédente, dans lequel il s'agit, pour le groupe de canaux de communication, de canaux de communication parallèles au moins par sections qui peuvent être conçus ou configurés le long d'au moins une section entre d'un côté le nuage resp. une ou plusieurs applications dans le nuage, en particulier un ou plusieurs de ce qu'il est convenu d'appeler des services dans le nuage, et d'un autre côté l'appareil demandeur resp. le client demandeur.

3. Procédé selon l'une quelconque des revendications précédentes, dans lequel les canaux de communication d'un groupe de canaux de communication se différencient les uns des autres en ce qui concerne la fonctionnalité d'un ou plusieurs microservices et/ou du nombre des microservices et/ou de la succession des microservices.

4. Procédé selon l'une quelconque des revendications précédentes, dans lequel un ou plusieurs resp. tous les canaux de communication sont formés à partir d'un ou plusieurs des microservices, dans lequel les un ou plusieurs microservices sont choisis en fonction du profil de sécurité resp. de la fonctionnalité de sécurité de l'appareil resp. du client, et dans lequel pour des fonctionnalités de sécurité différentes et/ou des profils de sécurité différents des microservices différents sont également choisis.

5. Procédé selon l'une quelconque des revendications précédentes, dans lequel la connexion du client avec le canal de communication est connectée avec un déverrouillage de microservices déterminés, dans lequel le déverrouillage uniquement de premiers microservices déterminés limite la possibilité de sauvegarder, de modifier et/ou de supprimer des données dans le nuage, conformément au profil de sécurité déterminé respectivement pour le client respectif et garantit que des clients avec un profil de sécurité élevé reçoivent d'autres possibilités et des possibilités élargies en tant que clients avec un profil de sécurité étroit en comparaison avec celui-ci.

6. Procédé selon la revendication 1,
dans lequel la connexion d'un appareil (12-16) à un canal de communication (26-30) adapté au profil de sécurité déterminé de l'appareil (12-16) avec un déverrouillage de premiers microservices (40) prédéfinis ou aptes à être prédéfinis issus d'un groupe de premiers microservices (40) pour l'appareil (12-16).

7. Procédé selon la revendication 1 ou 6,
dans lequel la connexion d'un appareil (12-16) à un canal de communication (26-30) adapté au profil de sécurité déterminé de l'appareil (12-16) est connectée avec une activation de seconds microservices (42) prédéfinis ou aptes à être prédéfinis issus d'un groupe de seconds microservices (42) destinés à la surveillance des données transmises par le biais du canal de communication (26-30).

8. Procédé selon la revendication 1, 6 ou 7,
dans lequel la connexion d'un appareil (12-16) à un canal de communication (26-30) adapté au profil de sécurité déterminé de l'appareil (12-16) est effectuée conformément aux données dans une base de données de configuration de canal (34) accessible au service de conciergerie (24).

9. Programme informatique (44) avec des moyens de code de programme pour mettre en oeuvre toutes les étapes de chaque quelconque des revendications 1 à 8 lorsque le programme informatique (44) est exécuté sur une unité de traitement (58) fonctionnant en tant qu'interface avec le nuage (10) ou dans le nuage (10).

10. Produit de programme informatique avec des moyens de code de programme qui sont sauvegardés sur un support de données lisible par ordinateur pour mettre en oeuvre le procédé selon chaque quelconque des revendications 1 à 8 lorsque le produit de programme informatique est exécuté sur une unité de traitement (58) fonctionnant en tant qu'interface avec le nuage (10) ou dans le nuage (10).

11. Support de sauvegarde numérique avec des signaux de commande lisibles de manière électronique qui peuvent coopérer avec une unité de traitement (58) fonctionnant en tant qu'interface avec le nuage (10) ou dans le nuage (10) de sorte qu'un procédé selon l'une quelconque des revendications 1 à 8 est exécuté.

12. Unité de traitement (58) avec une mémoire (56) dans laquelle un programme informatique (44) selon la revendication 9 est chargé, en ce que lors d'un fonctionnement de l'unité de traitement (58) destiné à l'exécution d'un procédé destiné à la connexion sécurisée d'un appareil (12-16) au nuage (10) selon l'une quelconque des revendications 1 à 8 est exécuté.
